# EUROPÄISCHE PATENTSCHRIFT

(11) **EP 3 440 374 B1**
(45) Veröffentlichungstag und Bekanntmachung des Hinweises auf die Patenterteilung: **19.08.2020**
(21) Anmeldenummer: 17715142.0
(22) Anmeldetag: 03.04.2017
(51) Int. Cl.: F16D 66/02, F16D 55/226

(54) **BEFESTIGUNGSVORRICHTUNG ZUR BEFESTIGUNG EINES SIGNALKABELS**
SECURING DEVICE FOR SECURING A SIGNAL CABLE
DISPOSITIF DE FIXATION SERVANT À FIXER UN CÂBLE DE SIGNALISATION

(30) Priorität: 04.04.2016 DE 102016106099
(43) Veröffentlichungstag der Anmeldung: 13.02.2019
(73) Patentinhaber: KNORR-BREMSE Systeme für Nutzfahrzeuge GmbH, 80809 München (DE)
(72) Erfinder: KRAUSE, Oliver, 82515 Wolfratshausen (DE); KLINGNER, Matthias, 82272 Moorenweis (DE); SCHÖNAUER, Manfred, 80995 München (DE)
(86) Internationale Anmeldenummer: PCT/EP2017/057851
(87) Internationale Veröffentlichungsnummer: WO 2017/174507

(56) Entgegenhaltungen:
- EP-A2- 0 190 705
- DE-A1- 4 340 452
- DE-A1-102005 060 551
- DE-A1-102012 009 841
- DE-A1-102012 106 424
- DE-B3-102011 012 271

## Beschreibung

Die Erfindung betrifft eine Befestigungsvorrichtung bestehend aus Belaghaltebügel und Halter, zur Befestigung eines Signalkabels an einem Belaghaltebügel einer Scheibenbremse nach dem Oberbegriff des Anspruchs 1. So eine Befestigungsvorrichtung ist z.B. aus DE-A-10 2005 060 551 bekannt.

Zur Überwachung des Verschleißes und insbesondere zur Feststellung einer zulässigen Verschleißgrenze eines jeweiligen Reibbelages von Bremsbelägen sind Signalkabel - ausgebildet insbesondere als wenigstens eines oder mehrere Einzelleiterkabel oder als ein Mehrleiterkabel - bekannt, die ein Teil einer Bremsbelagverschleiß-Ermittlungseinrichtung sind. Dazu sind bei einer beispielhaften einfachen Bauform Verschleißsensoren, die mit dem Signalkabel verbunden sind, beispielsweise bereichsweise in den Reibbelag eingebettet, so dass sie beim Erreichen einer Verschleißgrenze von einer mit dem Reibbelag bei einer Bremsung in Kontakt stehenden Bremsscheibe angeschliffen werden, wodurch ein elektrischer Impuls erzeugt wird, der über das zugeordnete Signalkabel an eine Elektronikeinheit zur Auswertung und ggf. Abgabe eines Warnsignals geleitet wird.

Sowohl zum Schutz wie auch zur Verhinderung unkontrollierter Bewegungen vor allem bei fahrbedingten Erschütterungen, ist das wenigstens eine Signalkabel am Bremssattel befestigt, wozu ein Halter vorgesehen ist, in dem das Signalkabel geführt ist und der formschlüssig mit einem eine Montageöffnung des Bremssattels überspannenden Belaghaltebügel verbunden ist.

Eine Befestigungsvorrichtung ist in der EP 2 112 397 B1 offenbart, mit einem aus Blech bestehenden Halter, der den Belaghaltebügel im Wesentlichen überdeckt und zur festen Positionierung am Belaghaltebügel Klemmlaschen aufweist, die am Belaghaltebügel derart angreifen, dass der Halter fixiert ist.

Das Signalkabel ist dabei in angeformten Laschen des Halters geführt, die sich an der Oberseite des Belaghaltebügels abstützen.

Eine vergleichbare Konstruktion ist der WO 2008/060 392 A2 zu entnehmen. Der daraus bekannte Halter überdeckt den Belaghaltebügel, wobei das Signalkabel gleichfalls zwischen dem Halter und dem Belaghaltebügel geführt ist. Nachteilig bei den bisherigen Lösungen sind der relativ hohe Materialeinsatz des Halters sowie dessen einem optimierten Fertigungsprozess entgegenstehende umständliche Befestigung am Belaghaltebügel.

Eine besondere Bedeutung kommt diesem Umstand auch deshalb zu, weil komplettierte Scheibenbremsen, d.h. einschließlich am Belaghaltebügel befestigter Signalkabel als Serienteilen in großen Stückzahlen hergestellt werden.

Neben der erschwerten Montage des Halters gestaltet sich auch eine Demontage aufwändig, da die beidseitig, d.h. an den beiden Längsseiten des Belaghaltebügels klemmend angreifenden Klemmlaschen des Halters aufgebogen werden müssen, um die Signalkabel zu lösen und zu ersetzen.

Der Erfindung liegt die Aufgabe zugrunde, die Befestigungsvorrichtung der gattungsgemäßen Art so weiterzuentwickeln, dass sie einfacher und kostengünstiger herstell- und montierbar ist.

Diese Aufgabe wird durch eine Befestigungsvorrichtung mit den Merkmalen des Anspruchs 1 gelöst. Geschaffen wird eine Befestigungsvorrichtung zur Befestigung wenigstens eines Signalkabels an einem Belaghaltebügel einer Scheibenbremse, mit einem Halter, der an dem Belaghaltebügel angeordnet ist, wobei das Signalkabel in dem Halter geführt ist. Dabei ist der Halter einseitig an einem seitlichen Bereich des Belaghaltebügels angeordnet und an diesem form- und/oder reibschlüssig gehalten, wobei das Signalkabel zwischen dem Halter und der zugeordneten Seite des Belaghaltebügels geführt ist.

Die Erfindung schafft zudem eine Scheibenbremse mit einer Befestigungsvorrichtung nach einem der darauf bezogenen Ansprüche. Vorteilhafte Ausgestaltungen sind den Unteransprüchen zu entnehmen.

Die erfindungsgemäße Befestigungsvorrichtung und die entsprechende Scheibenbremse bieten jeweils gegenüber der des Standes der Technik eine ganze Reihe von Vorteilen. Hierzu zählt insbesondere ein sehr geringer Materialeinsatz. Vorzugsweise findet dabei ein Blech Verwendung, das durch Umformen entsprechend gestaltet wird.

Der Belaghaltebügel kann die Montageöffnung vollständig überspannen.

Alternativ kann er die Montageöffnung auch nicht vollständig insbesondere axial überspannen sondern nur an einer Seite am Bremssattel festgelegt sein. Dann wirkt er vorzugsweise radial auf nur den einen der beiden Bremsbeläge sichernd.

Der Halter verläuft parallel zur Längsrichtung des Belaghaltebügels, d.h. parallel zu einer Drehachse einer Bremsscheibe der Scheibenbremse. Dabei weist er Bereiche auf, die im Querschnitt U- oder C-förmig sind, unter Ausbildung eines oberen Seitenschenkels und eines parallel und abständig dazu verlaufenden unteren Seitenschenkels, die am Belaghaltebügel anliegen. Gebildet werden derart vorteilhaft zwei sich gegenüberliegenden federnde Klemmlaschen bildende Seitenschenkel, die form- und/oder reibschlüssig, vorzugsweise formschlüssig am Belaghaltebügel angreifen.

Diese Seitenschenkel bilden die seitliche Begrenzung für die Führung des Signalkabels, das somit vorteilhaft und kompakt zwischen einer zugeordneten Schmalseite des Belaghaltebügels und einem die beiden Klemmschenkel miteinander verbindenden Steg des Halters in Überspannrichtung des Belaghaltebügels angeordnet ist.

Der Belaghaltebügel ist mit die beiden Längskanten begrenzenden Erhebungen bzw. Stegen versehen, so dass zwischen diesen eine Sicke gebildet ist. Damit liegen Korrespondenzteile für den Formschluss mit dem Halter vor, dessen Klemmschenkel diese Erhebungen übergreifen und so zumindest eine quer zur Überspannrichtung wirksame Verschiebesicherung bilden.

Der Belaghaltebügel ist so ausgebildet, dass korrespondierende Formschlussmittel vorgesehen sind. Die entsprechende Ausgestaltung des Belaghaltebügels gestaltet sich kostengünstig, so dass eine Reduzierung der Herstellungskosten auch durch diese Maßnahme nicht nennenswert beeinträchtigt wird.

In diesem Zusammenhang sei erwähnt, dass bei entsprechender Gestaltung des Halters, die auch die volle Funktionsfähigkeit beinhaltet, eine Materialersparnis von bis zu 60 % gegenüber einem Halter nach dem Stand der Technik erzielbar ist.

Der Halter ist auch an einem Belaghaltebügel befestigbar, der abweichend von einer Streifenform aus einem gebogenen Drahtbügel gebildet ist, mit zwei parallel und abständig zueinander angeordneten, die Montageöffnung überspannenden Drahtschenkeln.

Gemäß der Erfindung ist der Halter dann einseitig an einem Drahtschenkel festgelegt, wobei der Drahtbügel, d.h., die Drahtschenkel, im Querschnitt mehreckig, rund oder unrund sind. Bei einem runden Querschnitt ist der zugeordnete Drahtschenkel und/oder der Halter entsprechend so zu modifizieren, dass ein Formschluss ermöglicht ist, so dass der Halter sowohl in Überspannrichtung des Belaghaltebügels wie auch quer dazu gesichert gehalten ist.

Neben den gegenüber dem Stand der Technik deutlich reduzierten Herstellungskosten aufgrund des geringen Materialanteils, ergibt sich eine Kostenreduzierung auch aus einer vereinfachten Montage, die durch die erfindungsgemäße Ausgestaltung der Befestigungsvorrichtung zur Befestigung möglich ist.

Zur Anbringung des Halters am Belaghaltebügel ist lediglich ein seitliches Aufschieben des Halters auf den Belaghaltebügel erforderlich, was ohne Werkzeug, d.h. manuell erfolgen kann, lediglich unter Aufspreizung der Klemmschenkel.

Hierzu können die sich gegenüberliegenden Seitenschenkel mit Einführschrägen versehen sein, die einen trichterförmigen Einführschlitz des Halters bilden, d.h. begrenzen.

Die sich aus der vereinfachten Montage ergebenden Vorteile stellen sich gleichermaßen bei einer austauschbedingten Demontage des Halters ein, wenn ein mit dem Signalkabel verbundener Verschleißsensor, der in einem Reibbelag eines Bremsbelages positioniert ist, wegen Verschleißes ausgewechselt werden muss.

Nach einem weiteren Gedanken der Erfindung sind das Signalkabel und der Halter vormontiert zu einer Baueinheit zusammengefasst, wodurch sich die Montage des Halters deutlich vereinfacht.

Um eine sichere Fixierung des Signalkabels im Halter von der Vorfertigung bis zur Montage am Belaghaltebügel zu gewährleisten, kann der Halter in seinem Innern mit angeformten, insbesondere durch Stanzen abgewinkelten Sperrlaschen versehen sein, die das Signalkabel klemmend halten. Überdies bilden die Sperrlaschen einen Anschlag zum Belaghaltebügel, so dass ein Verschieben des Halters quer zur Längserstreckung des Belaghaltebügels und damit ein Einklemmen des Signalkabels ausgeschlossen ist, wie dies ansonsten bei entsprechend einwirkenden Kräften möglich wäre.

Im Übrigen wird dadurch eine sozusagen Vorzentrierung des Signalkabels erreicht, was insofern vorteilhaft ist, als auf ein zusätzliches Bauteil, das am Belaghaltebügel befestigt wird, wie beim Stand der Technik, verzichtet werden kann.

Vorteilhaft ist insbesondere auch eine Ausgestaltung der Scheibenbremse mit einem Bremssattel mit einer Montageöffnung für die Bremsbeläge, bei welcher der Belaghaltebügel im Querschnitt senkrecht zu seiner Längsrichtung vorzugsweise parallel zur Drehachse im Wesentlichen eine abgeflachte Form aufweist, insbesondere die Form eines (flachen) Rechtecks, mit zwei Kurzseiten und zwei Langseiten, wobei die Längsrichtung des Belaghaltebügels parallel zu einer Drehachse der Bremsscheibe liegt, wobei das Signalkabel zwischen dem Halter und einer zugeordneten kurzen Seite des im Querschnitts flachen Belaghaltebügels geführt und gehalten ist. Vorzugsweise liegen die Langseiten des Belaghaltebügels bezogen auf die Bremsscheibendrehachse bzw. auf dazu konzentrische gedachte Kreise tangential und die Kurzseiten im Wesentlichen radial zur Drehachse. Derart liegt das Signalkabel gut geschützt und raumsparend am Belaghaltebügel und an seinem Halter.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

### Es zeigen:

- Figuren 1 und 2: ein Ausführungsbeispiel einer erfindungsgemäßen Befestigung jeweils in einer perspektivischen Draufsicht auf einen Teilausschnitt einer Scheibenbremse
- Figur 3: eine vergrößerte Ansicht des Ausschnitts nach Figur 1 in einer vormontierten Stellung des Halters
- Figuren 4 und 5: jeweils Ausführungsbeispiele eines Halters in einem Querschnitt
- Figur 6: ein weiteres Ausführungsbeispiel eines Halters in montierter Stellung in einer geschnittenen Seitenansicht
- Figur 7: eine perspektivische Draufsicht auf die Ausführungsvariante nach Figur 6
- Figur 8: ein weiteres Ausführungsbeispiel des Halters, gleichfalls in einer perspektivischen Draufsicht.

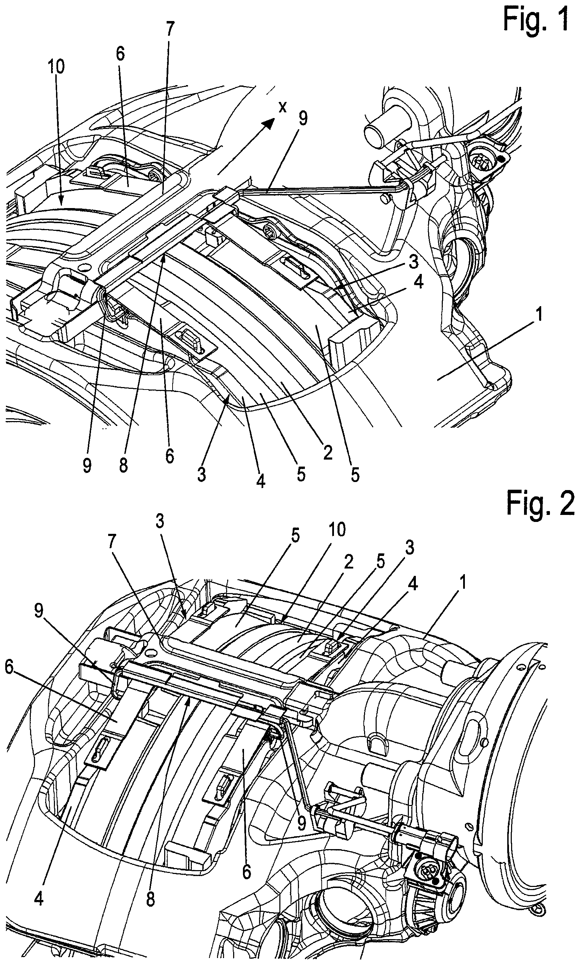

In den **Figuren 1 und 2** ist jeweils in einem Ausschnitt eine Scheibenbremse - insbesondere ausgelegt für einen Einsatz in einem Nutzfahrzeug - abgebildet.

Die Scheibenbremse weist einen Bremssattel 1 auf. Dieser übergreift eine fahrzeugseitig drehbar angeordnete Bremsscheibe 2. In dem Bremssattel 1 sind zwei jeweils eine Belagträgerplatte 4 und einen damit verbundenen Reibbelag 5 aufweisende Bremsbeläge 3 angeordnet, die beidseitig der Bremsscheibe 2 positioniert sind. Bei einer Bremsung gelangen die Reibbeläge 5 und die drehbare Bremsscheibe 2 miteinander in Reibkontakt, so dass die Bremsscheibe 2 und damit das Fahrzeug abgebremst werden.

Insbesondere zur Montage bzw. Demontage der Bremsbeläge 3 weist der Bremssattel 1 eine vorzugweise umfangsgeschlossene Montageöffnung 10 auf.

Diese Montageöffnung 10 ist von einem am Bremssattel 1 direkt oder indirekt gehaltenen Belaghaltebügel 7 überspannt bzw. überbrückt, gegen den hier Belaghaltefedern 6 drücken, wobei diese an den die Reibbeläge 5 tragenden Belagträgerplatten 4 der Bremsbeläge 3 angeordnet sind.

Der Belaghaltebügel 7 kann die Montageöffnung 10 vollständig überspannen, insbesondere parallel zur Drehachse der Bremsscheibe. Alternativ kann er die Montageöffnung 10 auch nicht vollständig überspannen sondern nur an einer Seite am Bremssattel 1 festgelegt sein (nicht dargestellt). Er liegt auch dann vorzugsweise parallel zur Drehachse der Bremsscheibe. Dann wirkt er vorzugsweise radial auf nur den einen der beiden Bremsbeläge 3 sichernd. Auch an einem solchen Belaghaltebügel 7 ist die Erfindung realisierbar. Der andere Bremsbelag ist dann anders radial gesichert. Die Bremsbeläge 3 sind in vorzugsweise in Belagschächten eines Bremsträgers gehalten. Der Bremssattel 1 ist vorzugsweise ein Schiebesattel. Durch die Montageöffnung sind die Bremsbeläge vorzugsweise in den Bremsträger 1 einsetzbar.

Zur Verschleißerkennung eine infolge von Bremsungen auftretenden Verschleißes der Reibbeläge 5 ist in diese jeweils ein Verschleißsensor (hier nicht dargestellt) integriert. Mit den Verschleißsensoren ist jeweils ein Signalkabel 9 verbunden. Wenigstens eines der Signalkabel 9 ist, die Montageöffnung 10 überquerend, verlegt und - (hier nicht zu erkennen) zu einer Bremsbelagverschleiß-Ermittlungs- und ggf. Anzeigeeinrichtung der Scheibenbremse geführt.

Das Signalkabel 9 ist durch einen Halter 8 geführt, der einseitig in Überspannrichtung X des Belaghaltebügels 7 an diesem form- und/oder reibschlüssig gehalten ist. Der Belaghaltebügel 7 weist im Querschnitt senkrecht zu seiner Längsrichtung bzw. senkrecht zur Überspannungsrichtung X im Wesentlichen die Form eine abgeflachte Form auf, insbesondere die Form eines (flachen) Rechtecks. Die Überspannungsrichtung X und die Längsrichtung des Belaghaltebügels 7 liegen parallel zur Drehachse der Bremsscheibe 2.

Der Halter 8 ist danach einseitig an einem seitlichen Bereich des Belaghaltebügels 7 angeordnet und an diesem form- und/oder reibschlüssig gehalten, wobei das Signalkabel 9 zwischen dem Halter 8 und einer zugeordneten Seite des Belaghaltebügels 7 geführt ist. Der Begriff "seitlich" bezieht sich hier auf die kurzen Seiten des Querschnitts-Rechtsecks des Belaghaltebügels 7.

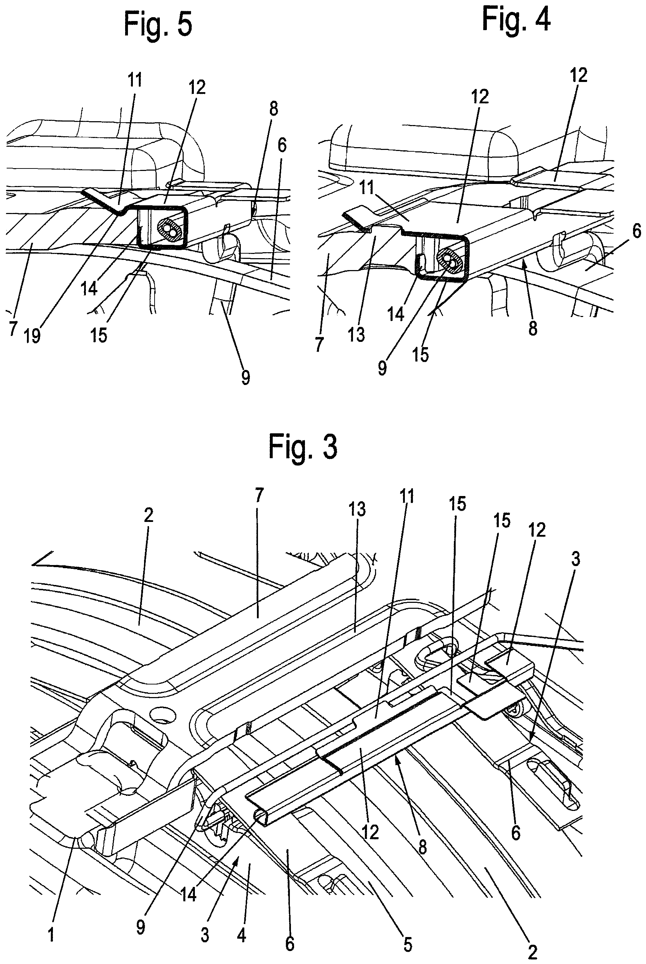

In den **Figuren 3-5** ist jeweils ein solcher Halter 8 vergrößert dargestellt.

Darin ist zu erkennen, dass der Halter 8 im Beispiel im Querschnitt U-förmig ausgebildet ist, mit zwei parallel und abständig zueinander verlaufenden Seitenschenkeln 12, 15, wobei ein oberer Seitenschenkel 12 an der der Belaghaltefeder 6 abgewandten Seite des Belaghaltebügels 7 anliegt, während sich der dazu untere Seitenschenkel 15 an der gegenüberliegenden, also der Unterseite des Belaghaltebügels 7 abstützt.

Im Beispiel ist an einen Teilbereich des oberen Seitenschenkels 12 ein Klemmschenkel 11 angeformt, der bei der in der **Figur 4** gezeigten Ausführung einen Steg 13 des Belaghaltebügels 7 übergreift, so dass sich quer zur Längserstreckung des Belaghaltebügels 7 eine Verschiebesicherung für den Halter 8 ergibt.

Der wenigstens eine Steg 13 erstreckt sich in der Längserstreckungsrichtung des Belaghaltebügels 7 zumindest über einen Teil der Länge des Belaghaltebügels 7 und steht von diesem vor. Die Längserstreckungsrichtung entspricht der Überspannungsrichtung X. Diese liegt vorzugsweise parallel zur Drehachse der Bremsscheibe 2.

Ein freier Kantenbereich des Klemmschenkels 11 des Halters 8 ist als Einführschräge ausgebildet, so dass sich der Klemmschenkel 11 bei einer Montage des Halters 8 leicht über den Steg 13 schieben lässt. Bei einer Demontage des Halters 8 dient die Einführschräge des Klemmschenkels 11 dem Ansetzen eines geeigneten Werkzeugs, beispielsweise eines Schraubendrehers.

In der **Figur 5** ist eine andere Variante der Klemmung des Halters 8 am Belaghaltebügel 7 erkennbar. Der Halter 8 ist wiederum einseitig an einem seitlichen Bereich des Belaghaltebügels 7 angeordnet und an diesem form- und/oder reibschlüssig gehalten, wobei das Signalkabel 9 zwischen dem Halter 8 und einer zugeordneten Seite des Belaghaltebügels 7 geführt ist

Hier liegt der Klemmschenkel 11 in einer Furche 19 des Belaghaltebügels 7 ein, so dass sich gleichfalls ein Formschluss und durch die Einführschräge des Klemmschenkels 11 zusätzlich ein Reibschluss quer zur Längserstreckung des Belaghaltebügels 7 ergibt.

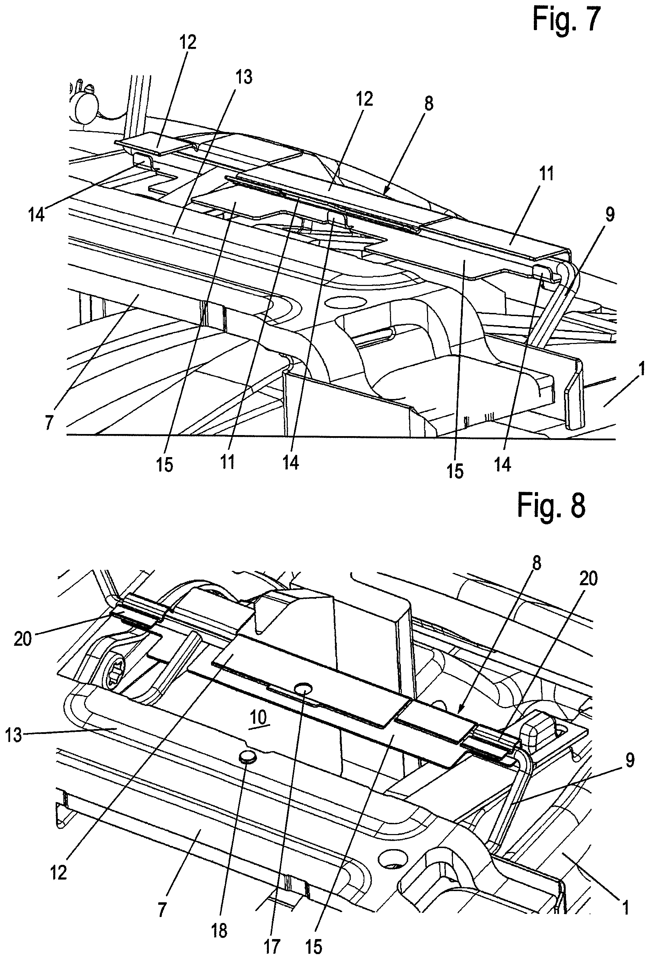

Zur Fixierung des Signalkabels 9 im Halter 8 sind an den unteren Seitenschenkel abgewinkelt angeformte Sperrlaschen 14 vorgesehen, die im Zusammenwirken mit insbesondere in der **Figur 8** erkennbaren Klemmlaschen 20 eine bleibende Positionierung des Signalkabels 9 im Halter 8 gewährleisten.

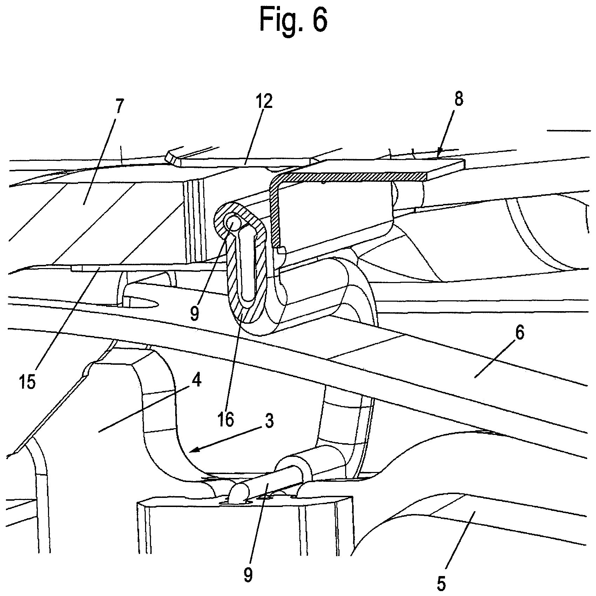

Die **Figur 6** gibt einen vergrößerten Ausschnitt in einer geschnittenen Seitenansicht des montierten Halters 8 wieder. Darin ist zu erkennen, dass das Signalkabel 9 in einer flexiblen Hülle 16 gehalten ist, die in dem zwischen dem Belaghaltebügel 7 und dem Halter 8 gebildeten Innenraum geführt ist und die einen Beschädigungsschutz für das Signalkabel 9 bildet.

Ebenso wie die Figur 3 ist auch in den **Figuren 7** und 8 der Halter 8 vor einer Montage, d.h. vor einem Aufschieben auf den Belaghaltebügel 7 dargestellt.

Dabei ist in den Figuren 7 und 8 der Halter 8 als vormontierte Baueinheit erkennbar, bei der der Halter 8 werksseitig mit dem Signalkabel 9 bestückt ist, so dass diese Baueinheit insoweit funktionsfähig an den montierten Belaghaltebügel 7 angebracht werden kann.

Als weitere Möglichkeit einer formschlüssigen Verbindung des Halters 8 mit dem Belaghaltebügel 7 ist, gemäß der Figur 8, vorgesehen, einen der Seitenschenkel 12, 15, im Beispiel der obere Seitenschenkel 12, mit einem Loch 17 zu versehen, in das ein Zapfen 18 des Belaghaltebügels 7 eingreift. Zum Überfahren des Zapfens 18 bei der Montage des Halters 8 ist die bereits erwähnte Einführschräge des Klemmschenkels 11 vorgesehen.

### Bezugszeichenliste

- 1: Bremssattel
- 2: Bremsscheibe
- 3: Bremsbelag
- 4: Belagträgerplatte
- 5: Reibbelag
- 6: Belaghaltefeder
- 7: Belaghaltebügel
- 8: Halter
- 9: Signalkabel
- 10: Montageöffnung
- 11: Klemmschenkel
- 12: oberer Seitenschenkel
- 13: Steg
- 14: Sperrlasche
- 15: unterer Seitenschenkel
- 16: Hülle
- 17: Loch
- 18: Zapfen
- 19: Furche
- 20: Klemmlasche

## Patentansprüche

1. Befestigungsvorrichtung bestehend aus Belaghaltebügel und Halter, zur Befestigung wenigstens eines Signalkabels (9) an einem Belaghaltebügel (7) einer Scheibenbremse, mit einem Halter (8), der an dem Belaghaltebügel (7) angeordnet ist, wobei das Signalkabel (9) in dem Halter geführt ist, wobei der Halter (8) einseitig an einem seitlichen Bereich des Belaghaltebügels (7) angeordnet und an diesem form- und/oder reibschlüssig gehalten ist, wobei das Signalkabel (9) zwischen dem Halter (8) und einer zugeordneten Seite des Belaghaltebügels (7) geführt ist,
wobei der Halter (8) im Wesentlichen parallel zu einer Längsrichtung (X) des Belaghaltebügels (7) verläuft und Bereiche aufweist, die im Querschnitt U- oder C-förmig sind, unter Ausbildung eines oberen Seitenschenkels (12) und eines parallel und abständig dazu verlaufenden unteren Seitenschenkels (15), die am Belaghaltebügel (7) anliegen,
wobei der Belaghaltebügel (7) an zumindest einer der dem oberen Seitenschenkel (12) oder unteren Seitenschenkel (15) zugeordneten Seite einen Steg (13) aufweist, der von einem Klemmschenkel (11) des oberen und/oder unteren Seitenschenkels (12, 15) umgriffen ist,
**dadurch gekennzeichnet, dass**
der Klemmschenkel (11) in einer Furche (19) des Belaghaltebügels (7) einliegt und dass der Belaghaltebügel (7) einen Zapfen (18) aufweist, der in ein Loch (17) des oberen oder unteren Seitenschenkels (12, 15) eingreift.

2. Befestigungsvorrichtung nach Anspruch 1,
**dadurch gekennzeichnet, dass**
der Klemmschenkel (11) in seinem freien Kantenbereich als Einführschräge ausgebildet ist.

3. Befestigungsvorrichtung nach einem der vorhergehenden Ansprüche,
**dadurch gekennzeichnet, dass**
am oberen und/oder unteren Seitenschenkel (12, 15) aufeinander zu gerichtet abgewinkelte Sperrlaschen (14) vorgesehen sind, die eine seitliche Verschiebebegrenzung für das Signalkabel (9) bilden.

4. Befestigungsvorrichtung nach einem der vorhergehenden Ansprüche,
**dadurch gekennzeichnet, dass**
am oberen und/oder unteren Seitenschenkel (12, 15) Klemmlaschen (20) angeformt sind, zur Fixierung des Signalkabels (9).

5. Befestigungsvorrichtung nach einem der vorhergehenden Ansprüche,
**dadurch gekennzeichnet, dass**
der Halter (8) und das Signalkabel (9) als eine Baueinheit vormontiert sind.

6. Befestigungsvorrichtung nach einem der vorhergehenden Ansprüche,
**dadurch gekennzeichnet, dass**
der Halter (8) als Blechformteil ausgebildet ist.

7. Scheibenbremse,
**gekennzeichnet durch**
eine Befestigungsvorrichtung nach einem der vorstehenden Ansprüche.

## Claims

1. A securing device comprising a pad retainer bracket and a retainer for securing at least one signal cable (9) to a pad retainer bracket (7) of a disc brake, having a retainer (8) arranged on the pad retainer bracket (7), the signal cable (9) running through the retainer (8), the retainer (8) being arranged on one side and in a lateral region of the pad retainer bracket (7) and being retained on it in a form and/or frictional fit, the signal cable (9) running between the retainer (8) and an associated side of the pad retainer bracket (7),
the retainer (8) running substantially parallel to a longitudinal direction (X) of the pad retainer bracket (7) and having regions with a U- or C-shaped cross section, thereby forming an upper side leg (12) and a lower side leg (15), which runs parallel to and at a distance from the upper side leg (12), both abutting the pad retainer bracket (7),
the pad retainer bracket (7) having on at least one side associated with the upper side leg (12) or the lower side leg (15) a web (13) that is encompassed by a clamping leg (11) of the upper and/or lower side leg (12, 15),
**characterised in that**
the clamping leg (11) lies in a furrow (19) of the pad retainer bracket (7) and the pad retainer bracket (7) has a pin (18) that engages in a hole (17) in the upper or lower side leg (12, 15).

2. A securing device according to claim 1,
**characterised in that**
the free edge region of the clamping leg (11) takes the form of a lead-in taper.

3. A securing device according to any one of the preceding claims,
**characterised in that**
provided on the upper and/or lower side leg (12, 15) are provided locking tabs (14) that are angled towards one other and form a lateral displacement limiter for the signal cable (9).

4. A securing device according to any one of the preceding claims,
**characterised in that**
clamping clips (20) for fixing the signal cable (9) are integrally formed on the upper and/or lower side leg (12, 15).

5. A securing device according to any one of the preceding claims,
**characterised in that**
the retainer (8) and the signal cable (9) are pre-installed as one component.

6. A securing device according to any one of the preceding claims,
**characterised in that**
the retainer (8) takes the form of a sheet metal part.

7. A disc brake,
**characterised by**
a securing device according to any one of the preceding claims.

## Revendications

1. Dispositif de fixation constitué d'un étrier de maintien de garniture et d'un support pour la fixation d'au moins un câble (9) de signal à un étrier (7) de maintien de garniture d'un frein à disque, comprenant un support (8), qui est disposé sur l'étrier (7) de maintien de garniture, la câble (9) de signal étant guidé dans le support, le support (8) étant disposé d'un côté sur une partie latérale de l'étrier (7) de maintien de garniture et y étant maintenu à complémentarité de forme et/ou à complémentarité de frottement, le câble (9) de signal étant guidé entre le support (8) et un côté associé de l'étrier (7) de maintien de la garniture,
dans lequel le support (8) s'étend sensiblement parallèlement à une direction (X) longitudinale de l'étrier (7) de maintien de la garniture et a des régions, qui, en section transversale, sont en forme de U ou de C, avec constitution d'une branche (12) latérale supérieure et d'une branche (15) latérale inférieure s'étendant parallèlement et à distance de celle-ci, qui s'appliquent à l'étrier (7) de maintien de la garniture,
dans lequel l'étrier (7) de maintien de la garniture a, sur au moins d'un côté associé à la branche (12) latérale supérieure ou à la branche (15) latérale inférieure, une entretoise (13), qui est prise par une branche (11) de serrage de la branche (12, 15) latérale supérieure et/ou inférieure,
**caractérisé en ce que**
la branche (11) de serrage est logé dans une rainure (19) de l'étrier (7) de maintien de la garniture et **en ce que** l'étrier (7) de maintien de la garniture a un tenon (18), qui pénètre dans un trou (17) de la branche (12, 15) latérale supérieure ou inférieure.

2. Dispositif de fixation suivant la revendication 1, **caractérisé en ce que**
la branche (11) de serrage est constituée sous la forme d'un biseau d'introduction dans sa partie de bord libre.

3. Dispositif de fixation suivant l'une des revendications précédentes,
**caractérisé en ce qu'**
il est prévu, sur la branche (12, 15) latérale supérieure et/ou inférieure, des languettes (14) d'arrêt coudées, dirigées les unes vers les autres, qui forment une limitation latérale de déplacement pour le câble (9) de signal.

4. Dispositif de fixation suivant l'une des revendications précédentes,
**caractérisé en ce que**
viennent de matière avec la branche (12, 15) latérale supérieure et/ou inférieure, des languettes (20) de serrage pour l'immobilisation du câble (9) de signal.

5. Dispositif de fixation suivant l'une des revendications précédentes,
**caractérisé en ce que**
le support (8) et le câble (9) de signal sont prémontés sous la forme d'une unité de construction.

6. Dispositif de fixation suivant l'une des revendications précédentes,
**caractérisé en ce que**
le support (8) est constitué d'une pièce conformée en tôle.

7. Frein à disque,
**caractérisé par**
un dispositif de fixation suivant l'une des revendications précédentes.
